(19) **Europäisches Patentamt / European Patent Office / Office européen des brevets**

(11) **EP 4 449 224 B1**

(12) **EUROPEAN PATENT SPECIFICATION**

(45) Date of publication and mention
of the grant of the patent:
**01.10.2025 Bulletin 2025/40**

(21) Application number: **22822100.8**

(22) Date of filing: **25.11.2022**

(51) International Patent Classification (IPC):
**G05D 23/19** $^{(2006.01)}$     **F24D 19/10** $^{(2006.01)}$
**F24H 15/104** $^{(2022.01)}$    **F24H 15/414** $^{(2022.01)}$
**F24D 10/00** $^{(2022.01)}$

(52) Cooperative Patent Classification (CPC):
**G05D 23/1917; F24D 10/003; F24D 19/1006;
F24H 15/104; F24H 15/414**

(86) International application number:
**PCT/EP2022/083248**

(87) International publication number:
**WO 2023/110362 (22.06.2023 Gazette 2023/25)**

(54) **HEATING SYSTEM WITH OPTIMIZING FUNCTION FOR OPERATING PARAMETERS**

HEIZUNGSSYSTEM MIT OPTIMIERUNGSFUNKTION FÜR BETRIEBSPARAMETER

SYSTÈME DE CHAUFFAGE AVEC FONCTION D'OPTIMISATION DES PARAMÈTRES DE
FONCTIONNEMENT

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **14.12.2021 DK PA202170617**

(43) Date of publication of application:
**23.10.2024 Bulletin 2024/43**

(73) Proprietor: **Danfoss A/S**
**6430 Nordborg (DK)**

(72) Inventors:
• **DOLENC, Bostjan**
**6430 Nordborg (DK)**
• **CHAVARRI, Leire**
**6430 Nordborg (DK)**
• **KOZJEK, Nejc**
**6430 Nordborg (DK)**
• **MUSIZZA, Bojan**
**6430 Nordborg (DK)**
• **TERZIC, Sandro**
**6430 Nordborg (DK)**

(74) Representative: **Inspicos P/S**
**Agern Allé 24**
**2970 Hørsholm (DK)**

(56) References cited:
**EP-A1- 3 428 547**

• **PADHEE SUBHRANSU: "Controller Design for
Temperature Control of Heat Exchanger System:
Simulation Studies", WSEAS TRANSACTIONS
ON SYSTEM AND CONTROL 2014, vol. 9, 8 July
2015 (2015-07-08), pages 485 - 491,
XP093021359, ISSN: 2224-2856, Retrieved from
the Internet <URL:https://www.researchgate.net/
profile/Subhransu-Padhee/publication/27986169
9_Controller_Design_for_Temperature_Control_
of_Heat_Exchanger_System_Simulation_Studie
s/links/559cac8d08aee2c16df181f6/
Controller-Design-for-Temperature-Control-of-
Heat-Exchanger-System-Simulation-Studies.
pdf> [retrieved on 20230206]**
• **TRAFCZYNSKI MARIAN ET AL: "Tuning
Parameters of PID Controllers for the Operation
of Heat Exchangers under Fouling Conditions",
CHEMICAL ENGINEERING TRANSACTIONS, 30
August 2016 (2016-08-30), pages 1237 - 1242,
XP093021333, ISBN: 978-88-95608-42-6,
Retrieved from the Internet <URL:https://www.
aidic.it/cet/16/52/207.pdf> [retrieved on
20230206], DOI: 10.3303/CET1652207**

• ABIRAMI* S. ET AL: "Detection and diagnosis of Oscillation in Shell and Tube Heat Exchanger Process", INTERNATIONAL JOURNAL OF ENGINEERING AND ADVANCED TECHNOLOGY, vol. 8, no. 6, 30 August 2019 (2019-08-30), pages 2237 - 2241, XP093021011, Retrieved from the Internet <URL:https://www.ijeat.org/wp-content/uploads/papers/v8i6/F8625088619.pdf> DOI: 10.35940/ijeat.F8625.088619

**Description**

BACKGROUND OF THE INVENTION

The present invention relates to a method of optimizing the operation of a heating system.

A substation is a unit positioned in many heating systems, such as between, e.g., a power supply network connected, e.g., to a district heating plant, and a domestic heating network including heat consuming devices. The substation unit normally comprises a heat exchanging unit exchanging heat between the heating fluid in the power supply network and the domestic heating network. In addition, the substation could include other devices, such as temperature sensors, flow controllers, such as valves and thermostats, a pressure regulation unit, and optionally a controller. The power supply network is also referred to as the primary side relative to the heat exchanger, and the domestic heating network as the secondary side.

By an improper commissioning of such a substation, it can be observed that a primary side set flow rate is never reached, thus not offering the required energy to the heat consuming devices to be sufficiently powered, at the discomfort for the consumer. This may further lead to oscillations, such as temperature oscillations, in the heating system. Another consequence could be that parameters of the controller may be incorrect or inappropriate. Such parameters may, e.g., be P and/or I terms, in the case that the controller is a PI controller or a PID controller. This may cause inadequate system responses, failure to detect mechanical faults in the substation, wrong settings of differential pressures, etc.

In prior art heating systems, operating parameters of the controller may be tuned or corrected manually, e.g. by changing settings of the heating system and monitoring the subsequent behaviour of the heating system. This is time consuming and cumbersome, and may further be undesirable, since it directly affects the operation of the heating system.

It therefore is an advantage to optimize the control of the controller of the substation or heating system in general, to eliminate the primary cause of the oscillations.

Subhransu Padhee: "Controller Design for Temperature Control of Heat Exchanger System: Simulation Studies", WSEAS Transactions on System and Control 2014, vol. 9, 8 July 2015, pages 485-491, discloses analysis of the performance of different controllers for a heating system with a shell and tube heat exchanger. Measured parameters related to the heating system are applied to a model in order to tune the controller.

Marian Trafczynski, et al.: "Tuning Parameters of PID Controller for the Operation of Heat Exchangers under Fouling Conditions", Chemical Engineering Transactions, 1 August 2016, pages 1237-1242, discloses tuning of parameters of PID controller for operation of heat exchangers under fouling conditions. It is concluded that fouling of the heat exchanger affects the stability of the controller, e.g. in terms of oscillations in the control response. It is suggested to periodically adjust the tuning of the PID parameters to take the fouling into account.

S. Abirami, et al.: "Detection and diagnosis of Oscillation in Shell and Tube Heat Exchanger Process", International Journal of Engineering and Advanced Technology, vol. 8, no. 6, 30 August 2019, pages 2237-2241, discloses a method for detection and diagnosis of oscillation in shell and tube heat exchanger process.

EP 3 428 547 A1 discloses a method for controlling a heating system comprising a controller a heat exchanging unit and at least one heat consuming device, where heat exchange takes place in the heat exchanging unit between a primary side fluid and a secondary side fluid.

DESCRIPTION OF THE INVENTION

It is an object of embodiments of the invention to provide a method for controlling a heating system, in which optimal control of the heating system is obtained, regardless of the operating conditions.

It is a further object of embodiments of the invention to provide a method for controlling a heating system, in which the risk of temperature oscillations is minimised.

It is an even further object of embodiments of the invention to provide a method for controlling a heating system, in which optimal control parameters can be obtained in an easy and reliable manner.

According to a first aspect, the invention provides a method for controlling a heating system, as defined in claim 1.

Thus, according to the first aspect, the invention provides a method for controlling a heating system. The heating system comprises a controller, a heat exchanging unit and at least one heat consuming device. The controller handles the control of at least part of the heating system.

In the heat exchanging unit, heat exchange takes place between a primary side fluid and a secondary side fluid. The primary side of the heat exchanging device is connected to a heating supply, e.g. in the form of a heating plant of any kind, such as a district heating network, a geothermal heating system, a solar heating system, etc., or a combination thereof. Accordingly, primary side fluid is supplied to the heat exchanging unit from the heating supply, via a primary side supply line, and returned from the heat exchanging unit via a primary side return line.

The secondary side of the heat exchanging unit is connected to a domestic heating system which includes the at least one heat consuming device. Accordingly, secondary side fluid is supplied to the at least one heat consuming device from the heat exchanging unit and via a secondary side supply line. When the secondary side fluid has passed through the at least one heat consuming device, it is returned to the heat exchanging unit via a secondary side return line.

In the method according to the first aspect of the invention, the heating system is initially operated. During this, a secondary side supply temperature, $T_{22}$, of fluid flowing in the secondary side supply line is monitored. In other words, the temperature of the secondary side fluid which leaves the heat exchanging unit in order to supply it to the at least one heat consuming device is monitored. Furthermore, it is determined whether or not oscillations are occurring in the secondary side supply temperature, $T_{22}$. This will be described in further detail below.

Oscillations in the secondary side supply temperature, $T_{22}$, may be an indication that the heating system is operated in a sub-optimal manner. This may be due to one or more operating parameters of the controller being set or selected in a manner which is not appropriate or optimal under the given operating conditions. Accordingly, it is desirable to avoid oscillations in the secondary side supply temperature, $T_{22}$.

Thus, in the case that it is determined that oscillations are occurring in the secondary side supply temperature, $T_{22}$, a simulation procedure is initiated, with the purpose of identifying one or more operating parameters of the controller which will cause the controller to operate in a manner which is appropriate and/or optimal under the given operating conditions. The simulation procedure is performed in the following manner.

A parametrized model of at least the heat exchanging unit is provided. The parametrized model reflects any design specifications of at least the heat exchanging unit, and possibly also of other components of the heating system. Accordingly, the parametrized model reflects how the actual heating system, or at least the heat exchanging unit, reacts when it is subjected to a given set of operational data, e.g. including various temperature levels, pressure levels, flow rates, etc., throughout the heating system. The parametrized model may further reflect currently applied operating parameters and/or settings of the controller. Thus, the parametrized model may be regarded as a digital twin of the heating system, or at least of the heat exchanging unit.

Next, operational data in the heating system is measured and provided to the parametrized model. The operational data could, e.g., include measured temperatures, pressure levels, flow rates and/or any other suitable kind of measured data which may be considered relevant with regard to the operation of the heating system. Accordingly, operational data which represents the current operating conditions in the real and operating heating system is fed to the parametrized model.

Finally, the parametrized model is applied for estimating an operating point where the heat exchanging unit operates at steady state, and where the operating point defines at least one operating parameter for the controller. The estimate is based on the provided measured operational data. Accordingly, the estimate is performed using the parametrized model which reflects how the real heating system reacts to various operating conditions, and based on operating data which is actually occurring in the real heating system. Thus, it can be assumed that the estimated operating point accurately reflects how the real heating system would react to the operating conditions which are actually occurring.

In the present context, the term 'steady state' should be interpreted to mean that the heat exchanging unit is operated in a manner in which at least temperature oscillations are avoided.

Accordingly, during the estimating step, control parameters for the controller may be tweaked or tuned until a set of control parameters has been reached which results in the heat exchanging unit operating at steady state. Since this is done using the parametrized model, which reflects how the heating system actually reacts, and based on the actually occurring operating conditions, this set of control parameters can be assumed to represent a set of control parameters which will cause the real heat exchanging unit to operate at steady state, under the given operating conditions. This completes the simulation procedure.

The simulation procedure described above, resulting in the estimated control parameters for the controller, is performed purely in the digital twin defined by the parametrized model. Accordingly, optimal control parameters for the controller, in terms of operating the heat exchanging unit at steady state, can be obtained without affecting the actual operation the real heating system. Furthermore, this is accurate and efficient, involves no or only little manual work, and may even be performed without technical staff being present at the site of the heating system.

Upon completion of the simulation procedure, the at least one operating parameter of the estimated operating point is provided to the controller. Accordingly, the controller is provided with at least one operating parameter which may be assumed to result in the heat exchanging unit operating at steady state.

Finally, the heating system is subsequently operated based on the provided at least one operating parameter, and thereby in a manner which may be expected to result in the heat exchanging unit operating at steady state and where temperature oscillations are avoided.

The method may further comprise the steps of:

- investigating, by means of the parametrized model and based on the provided measured operational data, whether or not it is feasible that a target temperature, $T_{target}$, of the secondary supply temperature, $T_{22}$, can be reached with the current settings of the heating system, and

- in the case that it is not feasible that the target temperature, $T_{target}$, can be reached, generating an alert.

According to this embodiment, the parametrized model, i.e. the digital twin of at least the heat exchanging unit, is further applied for investigating whether or not the current settings of the heating system will allow that a specified target temperature, $T_{target}$, of the secondary supply temperature, $T_{22}$, is reached, subject to tuning the operating parameters of the controller during the simulation procedure described above. If this is not considered feasible, it may be concluded that the current settings of the heating system are so far off relative to the optimal settings that the automatic estimation is not sufficient, and that a more fundamental change in the settings of the heating system may be required. Furthermore, manual tuning of the operating parameters for the controller may be necessary.

Thus, when the investigation described above reveals that it is not feasible that the target temperature, $T_{target}$, can be reached, an alert is generated in order to draw the attention of an operator to this, and, based thereon, decide how to proceed. Furthermore, the simulation procedure may, in this case, be discontinued or not started.

The step of estimating the operating point may comprise performing a step response simulation and collecting simulated data. According to this embodiment, when performing the simulation procedure, one or more operating settings or operating parameters is/are changed in a stepwise manner and fed to the parametrized model. Following such a stepwise change, the response of the parametrized model to the change is monitored, and simulated data is collected. The simulated data corresponds to real operating data which would be generated by the real heating system if the real heating system was subjected to the same stepwise change in operating settings or operating parameters.

When the parametrized model has settled, a new stepwise change in the operating settings or operating parameters is performed, and the response of the parametrized model is once again monitored. This is repeated until the steady state for the heat exchanging unit has been reached. Accordingly, the operating settings or operating parameters are tweaked or tuned in small steps, while monitoring the response of the parametrized model.

The method further comprises the step of performing a consistency check of the at least one operating parameter defined by the operating point by investigating whether or not the at least one operating parameter is within a predefined range.

Thus, it is further ensured that the at least one operating parameter which results from the simulation procedure is in fact within a predefined range. The predefined range may, e.g., represent boundaries or limits which should not be exceeded during operation the heating system. For instance, the predefined range may represent boundaries or limits set by an operator and/or the owner or consumers of the heating system in order to ensure that certain system requirements and/or minimum requirements of the consumers or users are met, e.g. in terms of heating capacity, temperatures, etc. Thus, it is ensured that the at least one operating parameter which is provided to the controller upon completion of the simulation procedure is not in conflict with overall or general requirements or desires.

The measured operational data may include at least one flow rate and/or at least one temperature. The at least one flow rate may be a flow rate of the primary side fluid and/or a flow rate of the secondary side fluid. The at least one temperature may be a primary side supply temperature, $T_{11}$, a primary side return temperature, $T_{12}$, the secondary side supply temperature, $T_{22}$, and/or a secondary side return temperature, $T_{21}$. All of these flow rates and temperatures are relevant with regard to the operation of the heating system, in particular with regard to ensuring an appropriate heat supply to the at least one heat consuming device, and with regard to avoiding oscillations in the heating system.

Alternatively or additionally, other kinds of operational data may be measured, e.g. pressure levels in various parts of the heating system.

The heating system may further comprise a pressure regulation unit arranged to control a differential pressure in a part of the heating system, and the measured operational data may include an actual differential pressure in the part of the heating system where the differential pressure is controlled by means of the pressure regulation unit. The pressure regulation unit may, e.g., be arranged to control a differential pressure across a main flow controller, e.g. in the form of a control valve.

The differential pressure in a relevant part of the heating system, e.g. across a main flow controller as described above, may be indicative for how well the heating system performs. For instance, a differential pressure of a certain magnitude is required in order to drive a fluid flow through a part of the heating system. According to this embodiment, the relevant information regarding the actual differential pressure is provided to the parametrized model as part of the measured operational data, during the simulation procedure. Accordingly, the resulting operating parameters for the controller also take the differential pressure into account.

The step of determining whether or not oscillations are occurring in the secondary side supply temperature, $T_{22}$, may comprise tracking a control error difference of the secondary side supply temperature, $T_{22}$.

According to this embodiment, the secondary side supply temperature, $T_{22}$, may be controlled in accordance with a setpoint strategy. In this case a setpoint temperature, representing a temperature which it is desired to obtain for the secondary side supply temperature, $T_{22}$, is set, and the heating system is controlled in order to cause the actual secondary side supply temperature, $T_{22}$, to approach the setpoint temperature. To this end, the difference between the setpoint temperature and the measured secondary side supply temperature, $T_{22}$, is monitored, and the controller seeks to minimise the difference. The difference is sometimes referred to as a control error difference, and the control strategy applied by the controller may include a feedback loop.

In the case that oscillations are not occurring in the secondary side supply temperature, $T_{22}$, the control error difference will approach zero in a smooth and non-fluctuating manner. On the other hand, in the case that oscillations occur in the secondary side supply temperature, $T_{22}$, the control error difference will fluctuate, and may possibly assume negative as well as positive values. Accordingly, the control error difference is a relevant indicator regarding whether or not oscillations are occurring in the secondary side supply temperature, $T_{22}$.

The operating point where the heat exchanging unit operates at steady state may define steady state operation with regard to a primary side supply temperature, $T_{11}$, a primary side return temperature, $T_{12}$, a secondary side supply temperature, $T_{22}$, a secondary side return temperature, $T_{21}$, a primary side flow rate and/or a secondary side flow rate. These temperatures and flow rates are all relevant with regard to whether or not the heating system operates appropriately and efficiently.

The controller may be a proportional integral (PI) controller or a proportional integral derivative (PID) controller, and the at least one operating parameter of the estimated operating point may comprise a proportional term (P) and/or an integral term (I) of the controller.

PI controllers and PID controllers include a feedback loop and perform the control based on a control error difference between a measured parameter and a setpoint value for the measured parameter. The controller combines proportional and integral control actions, and the proportional part is defined by a proportional term (P) and the integral part is defined by an integral term (I). Accordingly, the P term and the I term are relevant with regard to how the controller operates, and it is therefore relevant to select these parameters in an appropriate manner. Thus, it is appropriate to estimate the P term and/or the I term by means of the simulation procedure.

Alternatively or additionally, other relevant operating parameters for the controller may be estimated during the simulation procedure. This could, e.g., be relevant in the case that the controller is of another kind than a PI or PID controller.

The method may further comprise the step of estimating operational data which is not available as measured operational data, and the step of estimating an operating point where the heat exchanging unit operates at steady state may further be performed based on the estimated operational data.

In some situations, measured versions of all operational data which is considered necessary in order to perform the simulation may not be available. For instance, some parameters may be difficult, or even impossible, to measure. This may, e.g., be the case for data related to the secondary side flow rate. According to this embodiment, such unavailable operational data is replaced by estimated values, for the purpose of performing the simulation procedure based on a set of operational data which is as complete as possible, in order to obtain operating parameters for the controller which are as accurate as possible.

The method may further comprise the step of comparing a sampling rate of the measured operational data to a fastest dynamic component of the heating system and/or of a substation accommodating the heat exchanging unit, and selecting a first method M1 for estimating the operational data in the case that the sampling rate is faster than the fastest dynamic component, and selecting a second method M2 for estimating the operational data in the case that the sampling rate is slower than the fastest dynamic component.

According to this embodiment, at least two options are available for estimating the non-available operational data, i.e. the first method M1 and the second method M2, respectively. Whether the first method M1 or the second method M2 is selected for estimating the non-available operational data is based on a comparison between a sampling rate of the measured operational data, i.e. of the operational data which is actually available as measured data, and the dynamic behaviour of the heating system, or at least of a substation accommodating the heat exchanging unit. Thus, in the case that the sampling rate is faster than a fastest dynamic component, the first method M1 is selected, and in the case that the sampling rate is slower than the fastest dynamic component, the second method M2 is selected.

The first method M1 may include using an algorithm, such as a Kalman filter algorithm, that recursively estimates the non-available operational data, e.g. the secondary side flow rate. Other suitable algorithms include least-squares algorithms, modified Kalman filters, such as Salychev's "wave algorithm", and statistical patterns of the heat consumption of the heat consuming devices. In any event, the first method M1 should preferably include dynamic behaviour.

The second method M2 may include using a static model of the heat exchanging unit, and it may omit any temporal dynamics. This is easier and simpler than applying the dynamic approach described above, but may be considered sufficiently precise due to the slow sampling rate.

The simulation procedure may be performed at a cloud service. According to this embodiment, the simulation procedure and the tweaking or tuning of the operating parameters for the controller may be provided as an external service, which may be performed without physical access to the site of the heating system. For instance, the simulation procedure may be performed by a service provider.

According to a second aspect, the invention provides a controller for controlling operation of a heating system, wherein the controller is configured to perform the method according to the first aspect of the invention. The remarks set forth above are equally applicable here.

According to a third aspect, the invention provides a substation for a heating system, the substation comprising a heat exchanging unit and a main flow controller, wherein at least the main flow controller is configured to be operated according to a method according to the first aspect of the invention. The substation may further comprise a pressure regulation unit, e.g. configured to control a differential pressure across the main flow controller. The remarks set forth above are equally applicable here.

According to a fourth aspect, the invention provides a heating system comprising a controller according to the second aspect of the invention and/or a substation according to the third aspect of the invention.

BRIEF DESCRIPTION OF THE DRAWINGS

Fig. 1 shows an example heating system where a method according to an embodiment of the present invention could be implemented,

Fig. 2 is a flow chart illustrating a first embodiment of the present invention, including simulation to obtain optimized operation parameters, including a step of checking the feasibility to obtain the steady state of the heating system,

Fig. 3 is a flow chart illustrating additional steps of the parameter optimizing method, and

Fig. 4 is a flow chart illustrating adding a simulation to obtain missing parameter data.

DETAILED DESCRIPTION OF THE DRAWINGS

The detailed description and specific examples, while indicating embodiments of the invention, are given by way of illustration only, various changes and modifications within the spirit and scope of the invention will be apparent to those skilled in the art from the detailed description.

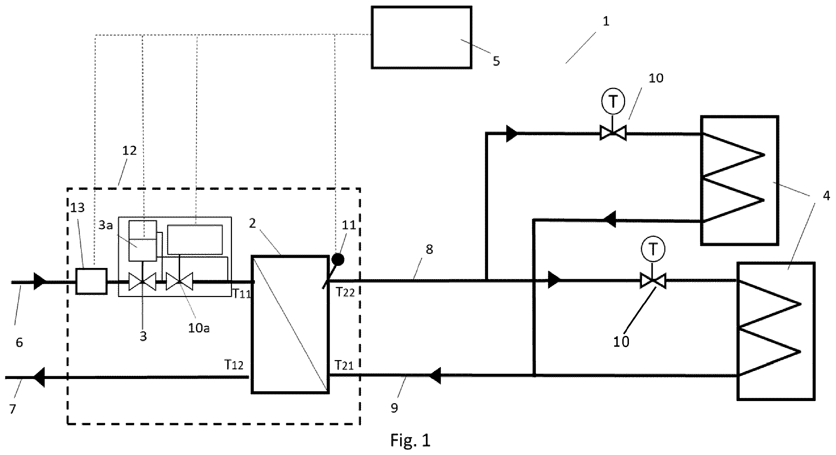

Fig. 1 illustrates an example heating system 1 to supply a heating fluid to one or more heat consuming devices 4. Heating fluid is supplied at a primary side to a heat exchanging unit 2 at a primary side supply temperature $T_{11}$, via a primary side supply line 6, and returned at a primary side return temperature $T_{12}$, via a primary side return line 7. This heating fluid is also referred to as the primary side fluid.

The primary side supply line 6 and the primary side return line 7 are connected to a heating plant of any kind, such as a district heating network, a geothermal heating system, a solar heating system, etc., or a combination thereof.

In the illustrated embodiment, the heat exchanging unit 2 is connected to a secondary side heating system via a secondary side supply line 8 and secondary side return line 9. In the heat exchanging unit 2, heat is exchanged between the secondary side fluid passing the heat exchanging unit 2 and the primary side fluid, providing a secondary side fluid supplied at a local supply temperature $T_{22}$ to the secondary side supply line 8, and returned with a secondary side return temperature $T_{21}$ by the secondary side return line 9.

The secondary side heating system includes one or more heat consuming devices 4, such as radiators, floor heating systems, use-water tapping, etc., and any needed flow controllers 10, such as valves and/or thermostats.

The heating system 1 further comprises a pressure regulation unit 3 which in the illustrated embodiment is positioned at the primary side supply line 6 and is adapted to maintain a substantially constant pressure in the part of the heating system 1 where it is positioned, in this case in the primary side supply line 6. This allows a hydraulic balancing of the primary side fluid flow, independent of pressure fluctuations. The same advantage can be obtained by alternatively positioning the pressure regulation unit 3 at the primary side return line 7.

Alternatively or additionally, a pressure regulation like the pressure regulation unit 3 could be adapted to make a hydraulic balancing of the secondary side fluid, and could therefore be positioned at the secondary side supply line 8 or at the secondary side return line 9.

The pressure regulation unit 3 may comprise a pressure regulation valve of any kind adapted to control the differential pressure in a part of the heating system 1, and may thus be in pressure communication with two positions at the heating system 1, the pressure difference between the two positions being the differential pressure. The pressure regulation unit 3 controls the differential pressure to a setpoint differential pressure which may be adjustable. One such example pressure regulation valve is to be found in, e.g., European Patent publication 3093729.

A controller 5 may be positioned in data exchange communication with the pressure regulation unit 3, where the data exchange communication could be of any kind such as wireless, wired, digital, analogue, etc. The controller 5 may be adapted to provide a setpoint differential pressure signal to the pressure regulation unit 3, or to control the heating system 1 to a desired flow rate by modifying the differential pressure across a main flow controller **10a by adjusting** the position of the pressure regulating unit 3 to set the desired flow for the maximum opening of the main flow controller 10a.

Temperature sensors 11 may be positioned to measure the temperatures of the fluids in the heating system 1, such as positioned to measure the primary side supply temperature $T_{11}$, the primary side return temperature $T_{12}$, the secondary side supply temperature $T_{22}$ and/or the secondary side return temperature $T_{21}$. Temperature sensors (not shown) may also be positioned in connection to the individual heat consuming devices 4, measuring any or all of the inlet and outlet temperatures of the passing secondary fluid(s) and the ambient temperature(s). The consumer of the heat consuming device(s) 4 may request a certain temperature of a space, such as a living room, which will be reflected in the measured indoor temperature and/or the inlet temperature and/or the outlet temperature of the heat consuming device(s) 4, such as the difference between the inlet temperature and the outlet temperature.

In many heating systems 1, the separation between the primary side and the secondary side of the heating system 1 is formed by a substation unit 12 comprising the heat exchanging unit 2. In addition, it could include other devices, such as temperature sensors 11, flow controllers 10a, such as valves and/or thermostats, a pressure regulation unit 3, and optionally the controller 5. The substation 12, thus, is installed and connected as the link between the primary side flow system, in the form of the primary side supply line 6 and the primary side return line 7, on the one hand, and on the other hand, the secondary side flow system, in the form of the secondary side supply line 8 and the secondary side return line 9, with the associated heat consuming devices 4 and other components.

In general, many of the devices in the heating system 1, such as the flow controlling devices 10, 10a, such as valves and thermostats, the pressure regulation unit 3, the heat exchanging unit 2, and thus also the substation 12, observe non-linear and dynamic behaviour. When, e.g., the secondary side flow rate changes, this affects the outputted secondary side supply temperature $T_{22}$ of the heat exchanging unit 2 in a non-linear manner.

The controller 5 is adapted to control and regulate the operation of the heating system 1, such as the flows, pressures and temperatures of the fluids entering and leaving the heat exchanging unit 2. The controller 5 may include a processor and may operate, e.g., as a PI or PID controller, this part being referred to as a PI or PID controller. The controller 5 could further include a memory storing required parameters, such as data regarding operating point, operational data and nominal data or settings.

**In the present** context, an operating point refers to the actual values at steady state of the heating system 1 and possibly of the substation 12.

The operating points of the substation 12 may be defined by several variables, such as a primary side flow rate, a secondary side flow rate, the primary side supply temperature $T_{11}$, the secondary side supply temperature $T_{22}$, the differential pressure over the main flow controller 10a, etc. For the heating system 1 itself, the operating point may in addition include the inlet and/or outlet temperatures of the heat consuming device(s) 4, etc. In the present invention a selected number of such variables could be used as data input.

The operational data in the present context refers to the actual data as being measured or operating in the heating system 1 in general, or the substation 12 more specifically. These data include measured data, such as the primary side supply temperature $T_{11}$, the primary side return temperature $T_{12}$, the secondary side supply temperature $T_{22}$, the secondary side return temperature $T_{21}$, and respectively the primary side flow rate and the secondary side flow rate. This may include the latest data or a number of actually measured and known data, possibly stored in the memory of the controller 5 or in the cloud, such as the latest N measurements, N being any natural number.

By nominal data or setting values are in general referred to the set operational data, such as the primary side supply temperature $T_{11}$, the primary side return temperature $T_{12}$, the secondary side supply temperature $T_{22}$, the secondary side return temperature $T_{21}$, and respectively the primary side flow rate and secondary side flow rate. These are the values the controller 5 aims to obtain in the heating system 1 by the control. Often 'nominal data' are also referred to as 'design data', such as design flow rate and design pressure.

The nominal data or setting values need not be the same as the data of the operation point, since the dynamic requirements of the heating system 1 may 'move' set operation away from steady state, the controller 5 then operating to keep the operational values stable and at least close to the nominal or setting values. The controller 5 aims to keep the secondary side supply temperature $T_{22}$ at the desired setpoint, regardless of the change of operating points, such as secondary flow, or primary side supply temperature $T_{11}$.

In the heating system 1 illustrated in Fig. 1, a main flow controller 10a is positioned at the primary side supply line 6, but it could be positioned in an alternative position, similarly to the pressure regulating unit 3, and could optionally be integrated into this, thus forming a shared pressure and flow controlling unit. The main flow controller 10a may be connected to an actuator to adjust its valve opening, where the actuator may be remotely controlled, e.g. by the controller 5. In Fig. 1, the main flow controller 10a and the pressure regulation unit 3 are indicated to be a part of the substation 12.

By an improper commissioning of such a substation 12, it can be observed that primary side nominal flow (the setpoint flow rate in the primary side supply line 6 and/or in the primary side return line 7) is never reached, thus not offering the required energy to the heat consuming devices 4 to be sufficiently powered, at the discomfort for the consumer. In case of higher demand, this causes the secondary side supply temperature $T_{22}$ to fall below a desired setpoint. This may cause oscillations in the secondary side supply temperature $T_{22}$.

Focusing on the control of the temperature on the secondary side of the heat exchanging unit 2, and assuming stable pressure on the primary side of the heat exchanging unit 2, one cause of the oscillations in the secondary side supply temperature $T_{22}$ can be attributed to the operating point of the substation 12.

When the substation 12 operates away from its nominal operating point (the operational settings, such as flow rates, temperatures, etc.), the non-linearity of, e.g., the main flow controller 10a in combination with the non-linear heat exchanging unit 2, the PI controller 5 may cause oscillatory responses of the main flow controller 10a. This in turn causes oscillations in the flow which inherently propagate through the non-linear heat exchanging unit 2. Due to phase shift between temperature and flow, the oscillations, which are caused by poor control, may influence the energy measurement, increase wear, etc. In either situation, the controlling of the heating system 1, such as by controlling the substation 12 by means of the controller 5, according to controller parameters becomes insufficient, and oscillations may occur, or insufficient heat may be supplied to the heat consuming devices 4 to the discomfort of the consumers, or even too much heat may be supplied, leading to a waste of heat, or power. By controller parameters is referred to predefined setting values, such as the temperature setpoints.

It is therefore an advantage to optimize the control of the controller 5 to eliminate the primary cause of the oscillations of the substation due to, e.g., a sub-optimally tuned PI controller 5.

A correctly commissioned substation 12 does not yet guarantee optimal operation of the control loop. In order to eliminate the oscillations in the heating system 1, the present invention introduces a control retuning functionality, which is based on the operating point of the substation 12, or at least of the parts usually associated with a substation 12, and adjusts the controller parameters of controller 5 to their optimal value at the current operating point.

For instance, in case of low power consumption, the instability of the control loop is eliminated by automatically retuning the controller 5 in the vicinity of the current operating conditions. This means that the substation 12 can actually act autonomously and thus adjust its own operation parameters, e.g. based on seasonality.

The solution is based on continuous tuning of the controller 5 on a digital twin (adequate mathematical model) of the substation 12, or heat exchanging unit 2, which is supported by online data.

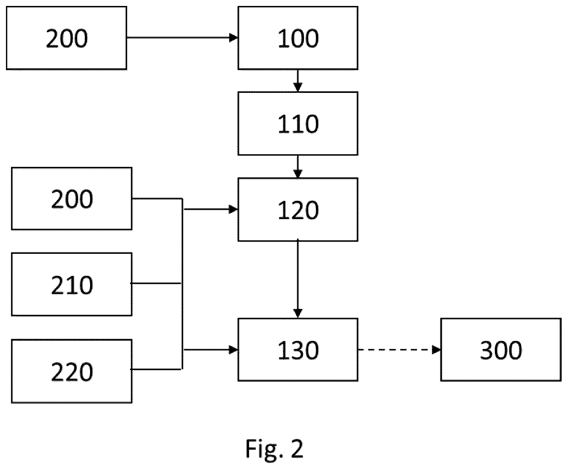

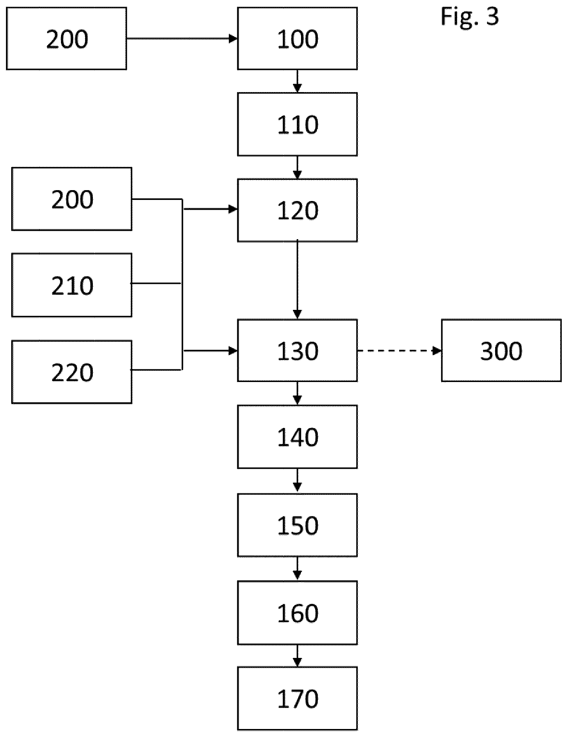

The present invention, thus, relates to a method, see also Figs. 2 and 3, to control a heating system 1, and includes the steps of providing 100 operational data 200 of the heat exchanging unit 2, and to identify 110 if there are oscillations in the flow of the heating system 2, and if oscillations are detected, starting a simulation procedure including the following steps.

  a) Providing 120 a parametrized model 210 of the heat exchanging unit 2 and using actual measured operational data on the parametrized model 210 to estimate the operating point of the heat exchanging unit 2 where it will operate at steady state.

  b) Check 130 the feasibility of reaching a target temperature $T_{target}$.

In general, in an embodiment the simulation procedure 140 in addition includes a parametric model 220 of the main flow controller 10a, which together with the parameterized model 210 of the heat exchanging unit 2, and possibly parameterized models of other included devices, forms a model of the substation 12.

Since many of the devices in the heating system 1, such as the flow controlling devices 10, 10a, such as valves and thermostats, the pressure regulation unit 3, the heat exchanging unit 2, and thus also the substation 12, observe non-linear and dynamic behaviour, the parametric models 210, 220 may also be non-linear and dynamic.

In an embodiment, the oscillations may be detected according to a method by tracking a control error difference, which could be based on the secondary side supply temperature $T_{22}$ or the secondary side return temperature $T_{21}$, such as tracking the error $e_k = T_{22,k} - T^R_{22,k}$. Here 'k' refers to the number k sample data and 'R' represents the reference temperature corresponding to the setpoint temperature.

The target temperature $T_{target}$ may be related to reaching a target primary side return temperature $T_{12}$.

The operational point for the heat exchanging unit 2 is related to the heat exchanger primary side supply temperature $T_{11}$, the primary side return temperature $T_{12}$, the secondary side supply temperature $T_{22}$, the secondary side return temperature $T_{21}$, and respectively the primary side flow rate and secondary side flow rate.

The feasibility can be checked by using the parametrized model 210 of the heat exchanging unit 210, and optionally the parameterized model 220 of the main flow controller 10a, and based on the load, the power required at the secondary side to estimate if the main flow controller 10a can be opened sufficiently to identify if required power can be delivered by the substation 12 at all according to the heat demand by the heat consuming devices 4.

As also previously indicated, the operational data includes measured data, such as the primary side supply temperature $T_{11}$, the primary side return temperature $T_{12}$, the secondary side supply temperature $T_{22}$, the secondary side return temperature $T_{21}$, and respectively the primary side flow rate and secondary side flow rate. This may include the latest data or a number of actually measured and known data, possibly stored in the memory of the controller 5, or in the cloud, such as the latest N measurements, N being any natural number.

In one embodiment the differential pressure setpoint of the pressure regulation unit 3, and/or a measured differential pressure over the main flow controller 10a may further be included as operational data 200, optionally as an actual input to the simulation procedure 140.

In one embodiment the present controller parameters may be included into the operational data, or at least used by the simulation procedure.

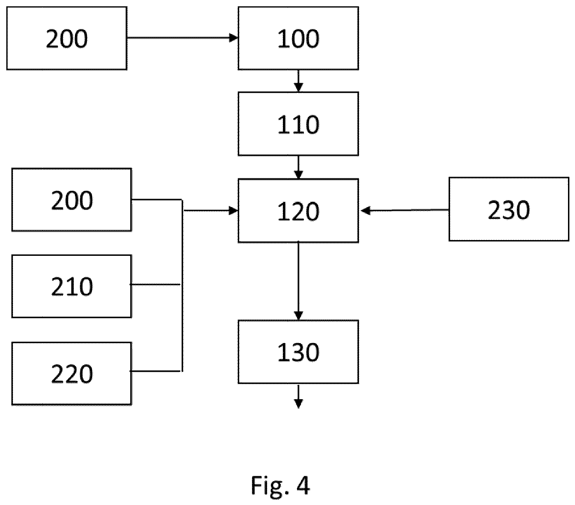

Referring to Fig. 4, some, or all, of these data as indicated to form the operational data may not always be available, especially those related to the secondary side flow rate, and in this situation an estimation technique is employed.

Two different approaches are included, where the selection is based on the available operational data.

The first method, M1, includes using an algorithm, such as a Kalman filter algorithm, that recursively estimates secondary side flow rate, and possibly some other missing data. Other possible algorithms could be least-squares solutions or modified Kalman filters, such as Salychev's "wave algorithm", and statistical pattern of the consumption of the heat consuming devices, or the secondary flow could be directly measured.

The second method, M2, includes using a static model of the heat exchanging unit 2, omitting any temporal dynamics and estimating the secondary side flow rate in a more static manner.

Selection between the first method M1 and the second method M2, as indicated, depends on the available operational data. If data is sampled faster than the fastest dynamic component in the heating system 1 or the substation 12, the first method M1 is used, otherwise the second method M2 is used, using a static model and averaged sensor readings, when the sampling is slower than the fastest dynamic component.

If it is concluded not to be feasible to reach the target temperature(s), such as of the heat consuming device(s) 4, the method could include the step of generating an alarm or indicating an error. Furthermore, a change of operation to operational parameters known to avoid oscillations may be initiated, but, e.g., with changed output like the temperature delivered to the consumers by the heat consuming devices 4, thus 'overruling' consumer settings. The latter embodiment preferably would be combined with an alarm or error indication that the system should be corrected by other means.

If it is feasible to reach the target temperature(s) $T_{target}$, the simulation procedure includes 140 (see Fig. 3) to run a simulation using a heat exchanging unit model 210 to find a model steady state.

Once the model steady state is found, the simulation procedure includes 150 to make a step response simulation and collect simulated data, in the present context meaning estimated operational data and settings for the heating system 1 to avoid oscillations and operate according to the consumer requirements, such as the required temperature being delivered by the heat consuming devices 4.

The step response simulation is an abrupt change of operational parameters in the system allowing to optimize the controller 5 parameters causing the controller 5 to operate in a manner which is power efficient and robust to changes. In short this is a manipulation of the primary flow and simulating the impact on the secondary outlet temperature $T_{22}$ supplied to the consumer.

The method, thus, after performing the step response simulation 150, using the substation model 210, may calculate 160 optimal controller parameters, and perform a consistency check. The consistency check could include checking if the optimal controller parameters are within a predefined ranged, this range possibly being stored in a memory of the controller 5, the cloud, etc.

Finally, the optimisation algorithm is exited 170, and the controller 5 returns to operate according to the optimized controller parameters.

Example model of the substation

Exact modelling of the behaviour of the main control valve 10a is a difficult task. However, from the perspective of temperature control, the important characteristics in an embodiment are described with a single equation, its static characteristics. That is because, even though there are certain important phenomena that thus are neglected, these are either substantially faster compared to the dynamics of heat transfer (dynamic response of the flow with respect to the valve opening), too slow (like surface degradation of, e.g., the main flow controller 10a), or simply not sufficiently influential (like hysteresis). If these, and others that were not mentioned, become apparent during valves' operation, they can be regarded as faults.

Therefore, in an example embodiment, the only mapping concerned is the valve static characteristics:

$$\phi = kv(y)\sqrt{(\delta p)},$$

Here $\phi$ is flow and kv(p) is valve characteristics (e.g. of main flow controller 10a) as a function of valve opening, y (corresponding to a spindle or valve pin position), and p is differential pressure over the valve. These characteristics may be modelled by simple polynomial fitted to experimental data.

References

    1 - Heating system
    2 - Heat exchanging unit
    3 - Pressure regulation unit
    4 - Heat consuming device
    5 - Controller
    6 - Primary side supply line
    7 - Primary side return line
    8 - Secondary side supply line
    9 - Secondary side return line
    10 - Flow controllers / valves / thermostats
    10a - Main flow controller
    11 - Temperature sensors
    12 - Substation

13 - Flow measuring device
100 - Step of the method to provide operational data of the heat consuming device(s)
110 - Step of the method to identify if there are oscillations in the heating system
120 - Step of the method of providing a parametrized model estimate of the heat consuming device(s)
130 - Step of the method of using operational data and a parametrized model estimate of the heat consuming device(s)
140 - Step of the method to check the feasibility of reaching target temperature(s) $T_{target}$
150 - Step of the method, wherein, if it is feasible to reach the target temperature(s) $T_{target}$, the simulation procedure includes to run a simulation using a heat exchanging unit model to find a model steady state
160 - Step of the method wherein, when the model steady state is found, the simulation procedure includes to make a step response simulation and collect data
170 - Step of the method, wherein the consistency check includes checking if the optimal controller parameters are within a predefined ranged
200 - Operational data input to the simulation
210 - Parametrized model of the heat exchanging unit
220 - Parametrized model of the main control valve
$T_{11}$ - Primary side supply temperature
$T_{12}$ - Primary side return temperature
$T_{22}$ - Secondary side supply temperature
$T_{21}$ - Secondary side return temperature

**Claims**

1. A method for controlling a heating system (1), the heating system (1) comprising a controller (5), a heat exchanging unit (2) and at least one heat consuming device (4), where heat exchange takes place in the heat exchanging unit (2) between a primary side fluid and a secondary side fluid, and where secondary side fluid is supplied to the at least one heat consuming device (4) from the heat exchanger unit (2) via a secondary side supply line (8), the method comprising the steps of:

   - operating the heating system (1) while monitoring a secondary side supply temperature, $T_{22}$, of fluid flowing in the secondary side supply line (8), and determining whether or not oscillations are occurring in the secondary side supply temperature, $T_{22}$,
   - in the case that oscillations are occurring in the secondary side supply temperature, $T_{22}$, initiating a simulation procedure, the simulation procedure comprising:

      - providing (120) a parametrized model (210) of at least the heat exchanging unit (2),
      - measuring operational data in the heating system (1) and providing the measured operational data to the parametrized model (210), and
      - estimating, by means of the parametrized model (210) and based on the provided measured operational data, an operating point where the heat exchanging unit (2) operates at steady state, where the heat exchanging unit (2) is operating in a manner in which at least temperature oscillations are avoided, the operating point defining at least one operating parameter for the controller (5),

   - providing the at least one operating parameter of the estimated operating point to the controller (5), and
   - subsequently operating the heating system (1) based on the provided at least one operating parameter,

   **characterized in that** the method further comprises the step of performing a consistency check (150) of the at least one operating parameter defined by the operating point by investigating whether or not the at least one operating parameter is within a predefined range.

2. A method according to claim 1, further comprising the steps of:

   - investigating (130), by means of the parametrized model and based on the provided measured operational data, whether or not it is feasible that a target temperature, $T_{target}$, of the secondary supply temperature, $T_{22}$, can be reached with the current settings of the heating system (1), and
   - in the case that it is not feasible that the target temperature, $T_{target}$, can be reached, generating an alert.

3. A method according to claim 1 or 2, wherein the step of estimating the operating point comprises performing a step response simulation and collecting simulated data.

4. A method according to any of the preceding claims, wherein the measured operational data includes at least one flow rate and/or at least one temperature.

5. A method according to any of the preceding claims, wherein the heating system (1) further comprises a pressure regulation unit (3) arranged to control a differential pressure in a part of the heating system (1), and wherein the measured operational data includes an actual differential pressure in the part of the heating system (1) where the differential pressure is controlled by means of the pressure regulation unit (3).

6. A method according to any of the preceding claims, wherein the step of determining whether or not oscillations are occurring in the secondary side supply temperature, $T_{22}$, comprises tracking a control error difference of the secondary side supply temperature, $T_{22}$, the control error difference being a difference between a setpoint temperature and a measured secondary side supply temperature, $T_{22}$.

7. A method according to any of the preceding claims, wherein the operating point where the heat exchanging unit (2) operates at steady state defines steady state operation with regard to a primary side supply temperature, $T_{11}$, a primary side return temperature, $T_{12}$, a secondary side supply temperature, $T_{22}$, a secondary side return temperature, $T_{21}$, a primary side flow rate and/or a secondary side flow rate.

8. A method according to any of the preceding claims, wherein the controller (5) is a proportional integral (PI) controller or a proportional integral derivative (PID) controller, and wherein the at least one operating parameter of the estimated operating point comprises a proportional term (P) and/or an integral term (I) of the controller (5).

9. A method according to any of the preceding claims, further comprising the step of estimating operational data which is not available as measured operational data, and wherein the step of estimating an operating point where the heat exchanging unit (2) operates at steady state is further performed based on the estimated operational data.

10. A method according to claim 9, further comprising the step of comparing a sampling rate of the measured operational data to a fastest dynamic component of the heating system (1) and/or of a substation (12) accommodating the heat exchanging unit (2), and selecting a first method M1 for estimating the operational data in the case that the sampling rate is faster than the fastest dynamic component, and selecting a second method M2 for estimating the operational data in the case that the sampling rate is slower than the fastest dynamic component.

11. A method according to any of the preceding claims, wherein the simulation procedure is performed at a cloud service.

12. A controller (5) for controlling operation of a heating system (1), wherein the controller (5) is configured to perform the method according to any of the preceding claims.

13. A substation (12) for a heating system (1), the substation (12) comprising a heat exchanging unit (2) and a main flow controller (10a), wherein at least the main flow controller (10a) is configured to be operated according to a method according to any of claims 1-11.

14. A substation (12) according to claim 13, further comprising a pressure regulation unit (3).

15. A heating system (1) comprising a controller (5) according to claim 12 and/or a substation (12) according to claim 13 or 14.

## Patentansprüche

1. Verfahren zum Steuern eines Heizungssystems (1), das Heizungssystem (1) eine Steuervorrichtung (5), eine Wärmetauscheinheit (2) und mindestens eine Wärme verbrauchende Vorrichtung (4) umfassend, wobei in der Wärmetauscheinheit (2) ein Wärmeaustausch zwischen einem primärseitigen Fluid und einem sekundärseitigen Fluid erfolgt und wobei sekundärseitiges Fluid aus der Wärmetauscheinheit (2) über eine sekundärseitige Versorgungsleitung (8) an die mindestens eine Wärme verbrauchende Vorrichtung (4) geliefert wird, das Verfahren die folgenden Schritte umfassend:

- Betreiben des Heizungssystems (1) unter Überwachen einer sekundärseitigen Versorgungstemperatur, $T_{22}$, des in der sekundärseitigen Versorgungsleitung (8) fließenden Fluids und Bestimmen, ob Schwingungen in der sekundärseitigen Versorgungstemperatur, $T_{22}$, auftreten oder nicht,
- in dem Fall, dass Schwingungen in der sekundärseitigen Versorgungstemperatur, $T_{22}$, auftreten, Einleiten eines Simulationsvorgangs, der Simulationsvorgang Folgendes umfassend:
- Bereitstellen (120) eines parametrisierten Modells (210) mindestens der Wärmetauscheinheit (2),
- Messen von Betriebsdaten in dem Heizungssystem (1) und Bereitstellen der gemessenen Betriebsdaten für das parametrisierte Modell (210), und
- Abschätzen, mittels des parametrisierten Modells (210) und auf Grundlage der bereitgestellten gemessenen Betriebsdaten, eines Betriebspunkts, an dem die Wärmetauscheinheit (2) in einem stationären Zustand arbeitet, in dem die Wärmetauscheinheit (2) in einer Weise arbeitet, in der mindestens Temperaturschwingungen vermieden werden, wobei der Betriebspunkt mindestens einen Betriebsparameter für die Steuervorrichtung (5) definiert,
- Bereitstellen des mindestens einen Betriebsparameters des geschätzten Betriebspunkts für die Steuervorrichtung (5), und
- nachfolgendes Betreiben des Heizungssystems (1) auf Grundlage des bereitgestellten mindestens einen Betriebsparameters,

**dadurch gekennzeichnet, dass** das Verfahren weiterhin den Schritt des Durchführens einer Konsistenzprüfung (150) des mindestens einen Betriebsparameters, der durch den Betriebspunkt definiert ist, durch Untersuchen, ob der mindestens eine Betriebsparameter innerhalb eines vordefinierten Bereichs liegt oder nicht, umfasst.

2. Verfahren nach Anspruch 1, weiterhin die folgenden Schritte umfassend:

- Untersuchen (130), mittels des parametrisierten Modells und auf der Grundlage der bereitgestellten gemessenen Betriebsdaten, ob es machbar ist, dass eine Zieltemperatur, $T_{Ziel}$, der sekundären Versorgungstemperatur, $T_{22}$, mit den aktuellen Einstellungen des Heizungssystems (1) erreicht werden kann, oder nicht und
- in dem Fall, dass es nicht machbar ist, dass die Zieltemperatur, $T_{Ziel}$, erreicht werden kann, Erzeugen einer Warnung.

3. Verfahren nach Anspruch 1 oder 2, wobei der Schritt des Abschätzens des Betriebspunkts Durchführen einer Schrittantwortsimulation und Erfassen simulierter Daten umfasst.

4. Verfahren nach einem der vorhergehenden Ansprüche, wobei die gemessenen Betriebsdaten mindestens eine Durchflussrate und/oder mindestens eine Temperatur umfassen.

5. Verfahren nach einem der vorhergehenden Ansprüche, wobei das Heizungssystem (1) weiterhin eine Druckregelungseinheit (3) umfasst, die eingerichtet ist, um einen Differenzdruck in einem Teil des Heizungssystems (1) zu steuern, und wobei die gemessenen Betriebsdaten einen tatsächlichen Differenzdruck in dem Teil des Heizungssystems (1) umfassen, bei dem der Differenzdruck mittels der Druckregelungseinheit (3) gesteuert wird.

6. Verfahren nach einem der vorhergehenden Ansprüche, wobei der Schritt des Bestimmens, ob Schwingungen in der sekundärseitigen Versorgungstemperatur, $T_{22}$, auftreten oder nicht, Verfolgen einer Steuerungsfehlerdifferenz der sekundärseitigen Versorgungstemperatur, $T_{22}$, umfasst, wobei die Steuerungsfehlerdifferenz eine Differenz zwischen einer Solltemperatur und einer gemessenen sekundärseitigen Versorgungstemperatur, $T_{22}$, ist.

7. Verfahren nach einem der vorhergehenden Ansprüche, wobei der Betriebspunkt, an dem die Wärmetauscheinheit (2) in einem stationären Zustand arbeitet, einen stationären Betrieb hinsichtlich einer primärseitigen Versorgungstemperatur, $T_{11}$, einer primärseitigen Rücklauftemperatur, $T_{12}$, einer sekundärseitigen Versorgungstemperatur, $T_{22}$, einer sekundärseitigen Rücklauftemperatur, $T_{21}$, einer primärseitigen Durchflussrate und/oder einer sekundärseitigen Durchflussrate definiert.

8. Verfahren nach einem der vorhergehenden Ansprüche, wobei die Steuervorrichtung (5) eine Proportionalintegral-Steuervorrichtung (PI-Steuervorrichtung) oder eine Proportionalintegraldifferenzial-Steuervorrichtung (PID-Steuervorrichtung) ist und wobei der mindestens eine Betriebsparameter des abgeschätzten Betriebspunkts einen Proportionalterm (P) und/oder einen Integralterm (I) der Steuervorrichtung (5) umfasst.

9. Verfahren nach einem der vorhergehenden Ansprüche, weiterhin umfassend den Schritt des Abschätzens von Betriebsdaten, die nicht als gemessene Betriebsdaten verfügbar sind, und wobei der Schritt des Abschätzens eines Betriebspunkts, an dem die Wärmetauscheinheit (2) im stationären Zustand arbeitet, weiterhin auf Grundlage der abgeschätzten Betriebsdaten durchgeführt wird.

10. Verfahren nach Anspruch 9, weiterhin umfassend den Schritt des Vergleichens einer Abtastrate der gemessenen Betriebsdaten mit einer schnellsten dynamischen Komponente des Heizungssystems (1) und/oder einer Unterstation (12), welche die Wärmetauscheinheit (2) beherbergt, und des Auswählens eines ersten Verfahrens M1 zum Abschätzen der Betriebsdaten in dem Fall, dass die Abtastrate schneller ist als die schnellste dynamische Komponente, und des Auswählens eines zweiten Verfahrens M2 zum Abschätzen der Betriebsdaten in dem Fall, dass die Abtastrate langsamer ist als die schnellste dynamische Komponente.

11. Verfahren nach einem der vorhergehenden Ansprüche, wobei der Simulationsvorgang bei einem Cloud-Dienst durchgeführt wird.

12. Steuervorrichtung (5) zum Steuern eines Betriebs eines Heizungssystems (1), wobei die Steuervorrichtung (5) eingerichtet ist, um das Verfahren nach einem der vorhergehenden Ansprüche durchzuführen.

13. Unterstation (12) für ein Heizungssystem (1), wobei die Unterstation (12) eine Wärmetauscheinheit (2) und eine Hauptflusssteuerung (10a) umfasst, wobei mindestens die Hauptflusssteuerung (10a) eingerichtet ist, um gemäß einem Verfahren nach einem der Ansprüche 1 bis 11 betrieben zu werden.

14. Unterstation (12) nach Anspruch 13, weiterhin eine Druckregelungseinheit (3) umfassend.

15. Heizungssystem (1), eine Steuervorrichtung (5) nach Anspruch 12 und/oder eine Unterstation (12) nach Anspruch 13 oder 14 umfassend.

**Revendications**

1. Procédé destiné à réguler un système de chauffage (1), le système de chauffage (1) comprenant un régulateur (5), une unité d'échange de chaleur (2) et au moins un dispositif consommateur de chaleur (4), un échange de chaleur ayant lieu dans l'unité d'échange de chaleur (2) entre un fluide côté primaire et un fluide côté secondaire, et le fluide côté secondaire étant fourni à l'au moins un dispositif consommateur de chaleur (4) depuis l'unité d'échange de chaleur (2) par le biais d'une conduite d'alimentation côté secondaire (8), le procédé comprenant les étapes suivantes :

- fonctionnement du système de chauffage (1) et surveillance simultanée d'une température d'alimentation côté secondaire, $T_{22}$, du fluide circulant dans la conduite d'alimentation côté secondaire (8), et détermination que des oscillations apparaissent ou non dans la température d'alimentation côté secondaire, $T_{22}$,
- dans le cas où des oscillations apparaissent dans la température d'alimentation côté secondaire, $T_{22}$, lancement d'une procédure de simulation, la procédure de simulation comprenant :
- l'obtention (120) d'un modèle paramétré (210) au moins de l'unité d'échange de chaleur (2),
- la mesure de données opérationnelles dans le système de chauffage (1) et la fourniture des données opérationnelles mesurées au modèle paramétré (210), et
- l'estimation, au moyen du modèle paramétré (210) et sur la base des données opérationnelles mesurées fournies, d'un point de fonctionnement où l'unité d'échange de chaleur (2) fonctionne en régime permanent, où l'unité d'échange de chaleur (2) fonctionne de manière à éviter au moins des oscillations de température, le point de fonctionnement définissant au moins un paramètre de fonctionnement pour le régulateur (5),
- la fourniture de l'au moins un paramètre de fonctionnement du point de fonctionnement estimé au régulateur (5), et
- le fonctionnement consécutif du système de chauffage (1) sur la base de l'au moins un paramètre de fonctionnement fourni,

**caractérisé en ce que** le procédé comprend en outre l'étape de réalisation d'un contrôle de cohérence (150) de l'au moins un paramètre de fonctionnement défini par le point de fonctionnement par détermination que l'au moins un paramètre de fonctionnement se situe ou non à l'intérieur d'une plage prédéfinie.

2. Procédé selon la revendication 1, comprenant en outre les étapes suivantes :

- détermination (130), au moyen du modèle paramétré et sur la base des données opérationnelles mesurées fournies, qu'il est possible ou non d'atteindre une température cible, $T_{cible}$, de la température d'alimentation secondaire, $T_{22}$, avec les réglages en cours du système de chauffage (1), et
- dans le cas où il n'est pas possible d'atteindre la température cible, $T_{cible}$, génération d'une alerte.

3. Procédé selon la revendication 1 ou 2, dans lequel l'étape d'estimation du point de fonctionnement comprend la réalisation d'une simulation de réponse d'étape et la collecte de données simulées.

4. Procédé selon l'une quelconque des revendications précédentes, dans lequel les données opérationnelles mesurées incluent au moins un débit et/ou au moins une température.

5. Procédé selon l'une quelconque des revendications précédentes, dans lequel le système de chauffage (1) comprend en outre une unité de régulation de pression (3) agencée pour réguler une pression différentielle dans une partie du système de chauffage (1), et dans lequel les données opérationnelles mesurées incluent une pression différentielle réelle dans la partie du système de chauffage (1) où la pression différentielle est régulée au moyen de l'unité de régulation de pression (3).

6. Procédé selon l'une quelconque des revendications précédentes, dans lequel l'étape de détermination que des oscillations apparaissent ou non dans la température d'alimentation côté secondaire, $T_{22}$, comprend le suivi d'une différence d'erreur de régulation de la température d'alimentation côté secondaire, $T_{22}$, la différence d'erreur de régulation étant une différence entre une température de consigne et une température d'alimentation côté secondaire mesurée, $T_{22}$.

7. Procédé selon l'une quelconque des revendications précédentes, dans lequel le point de fonctionnement où l'unité d'échange de chaleur (2) fonctionne en régime permanent définit un fonctionnement en régime permanent au regard d'une température d'alimentation côté primaire, $T_{11}$, d'une température de retour côté primaire, $T_{12}$, d'une température d'alimentation côté secondaire, $T_{22}$, d'une température de retour côté secondaire, $T_{21}$, d'un débit côté primaire et/ou d'un débit côté secondaire.

8. Procédé selon l'une quelconque des revendications précédentes, dans lequel le régulateur (5) est un régulateur proportionnel, intégral (PI) ou un régulateur proportionnel, intégral, dérivé (PID), et dans lequel l'au moins un paramètre de fonctionnement du point de fonctionnement estimé comprend un terme proportionnel (P) et/ou un terme intégral (I) du régulateur (5).

9. Procédé selon l'une quelconque des revendications précédentes, comprenant en outre l'étape d'estimation de données opérationnelles qui ne sont pas disponibles sous forme de données opérationnelles mesurées, et dans lequel l'étape d'estimation d'un point de fonctionnement où l'unité d'échange de chaleur (2) fonctionne en régime permanent est en outre réalisée sur la base des données opérationnelles estimées.

10. Procédé selon la revendication 9, comprenant en outre l'étape de comparaison d'une fréquence d'échantillonnage des données opérationnelles mesurées à une composante dynamique la plus rapide du système de chauffage (1) et/ou d'une sous-station (12) accueillant l'unité d'échange de chaleur (2), et sélection d'une première méthode M1 pour l'estimation des données opérationnelles dans le cas où la fréquence d'échantillonnage est plus rapide que la composante dynamique la plus rapide, et sélection d'une deuxième méthode M2 pour l'estimation des données opérationnelles dans le cas où la fréquence d'échantillonnage est plus lente que la composante dynamique la plus rapide.

11. Procédé selon l'une quelconque des revendications précédentes, dans lequel la procédure de simulation est réalisée au niveau d'un service en nuage.

12. Régulateur (5) destiné à réguler le fonctionnement d'un système de chauffage (1), le régulateur (5) étant conçu pour réaliser le procédé selon l'une quelconque des revendications précédentes.

13. Sous-station (12) pour un système de chauffage (1), la sous-station (12) comprenant une unité d'échange de chaleur (2) et un régulateur de débit principal (10a), au moins le régulateur de débit principal (10a) étant conçu pour fonctionner selon un procédé selon l'une quelconque des revendications 1 à 11.

14. Sous-station (12) selon la revendication 13, comprenant en outre une unité de régulation de pression (3).

15. Système de chauffage (1) comprenant un régulateur (5) selon la revendication 12 et/ou une sous-station (12) selon la revendication 13 ou 14.

Fig. 1

Fig. 2

Fig. 3

```
  ┌────────┐           ┌────────┐
  │  200   │──────────▶│  100   │
  └────────┘           └────────┘
                            │
                            ▼
                       ┌────────┐
                       │  110   │
                       └────────┘
                            │
  ┌────────┐                ▼
  │  200   │─────┐     ┌────────┐
  └────────┘     ├────▶│  120   │
  ┌────────┐     │     └────────┘
  │  210   │─────┤          │
  └────────┘     │          ▼
  ┌────────┐     │     ┌────────┐        ┌────────┐
  │  220   │─────┘────▶│  130   │─ ─ ─ ─▶│  300   │
  └────────┘           └────────┘        └────────┘
                            │
                            ▼
                       ┌────────┐
                       │  140   │
                       └────────┘
                            │
                            ▼
                       ┌────────┐
                       │  150   │
                       └────────┘
                            │
                            ▼
                       ┌────────┐
                       │  160   │
                       └────────┘
                            │
                            ▼
                       ┌────────┐
                       │  170   │
                       └────────┘
```

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3428547 A1
- EP 3093729 A

**Non-patent literature cited in the description**

- **SUBHRANSU PADHEE**. Controller Design for Temperature Control of Heat Exchanger System: Simulation Studies. *WSEAS Transactions on System and Control*, 2014, vol. 9, 485-491
- **MARIAN TRAFCZYNSKI et al.** Tuning Parameters of PID Controller for the Operation of Heat Exchangers under Fouling Conditions. *Chemical Engineering Transactions*, 01 August 2016, 1237-1242
- **S. ABIRAMI et al.** Detection and diagnosis of Oscillation in Shell and Tube Heat Exchanger Process. *International Journal of Engineering and Advanced Technology*, 30 August 2019, vol. 8 (6), 2237-2241